# EUROPÄISCHE PATENTSCHRIFT

(11) **EP 3 277 607 B1**
(45) Veröffentlichungstag und Bekanntmachung des Hinweises auf die Patenterteilung: **14.09.2022**
(21) Anmeldenummer: 16711538.5
(22) Anmeldetag: 07.03.2016
(51) Int. Cl.: B65G 51/03

(54) **VERFAHREN UND FÜHRUNGSSYSTEM FÜR DEN TRANSPORT VON BEHÄLTERN ODER BEHÄLTERKOMPONENTEN IN INDUSTRIEANLAGEN FÜR DIE BEHÄLTERHERSTELLUNG UND/ODER PRODUKTABFÜLLUNG**
METHOD AND GUIDE SYSTEM FOR THE TRANSPORT OF CONTAINERS OR CONTAINER COMPONENTS IN INDUSTRIAL SYSTEMS FOR CONTAINER PRODUCTION AND/OR PRODUCT FILLING
PROCÉDÉ ET SYSTÈME DE GUIDAGE POUR LE TRANSPORT DE RÉCIPIENTS OU DE COMPOSANTS DE RÉCIPIENTS DANS DES INSTALLATIONS INDUSTRIELLES POUR LA FABRICATION DE RÉCIPIENTS ET/OU LE REMPLISSAGE DE PRODUIT

(30) Priorität: 02.04.2015 DE 102015205984
(43) Veröffentlichungstag der Anmeldung: 07.02.2018
(73) Patentinhaber: KRONES AG, 93073 Neutraubling (DE)
(72) Erfinder: BRINSTER, Paul, 93073 Neutraubling (DE); EICHHAMMER, Tobias, 93073 Neutraubling (DE)
(74) Vertreter: Grünecker Patent- und Rechtsanwälte PartG mbB
(86) Internationale Anmeldenummer: PCT/EP2016/054766
(87) Internationale Veröffentlichungsnummer: WO 2016/155980

(56) Entgegenhaltungen:
- EP-A1- 1 215 146
- EP-A1- 2 221 261
- AU-B2- 596 797
- CH-A- 439 101
- DE-A1- 10 322 519
- FR-A1- 2 077 313
- FR-A1- 2 101 133
- GB-A- 2 290 221
- US-A- 5 311 979

## Beschreibung

Die Erfindung betrifft ein Verfahren und ein Führungssystem für den Transport von Behältern oder Behälterkomponenten gemäß Oberbegriff der Ansprüche 1 und 7, wie bekannt aus FR 2 101 133 A1, CH 439 101 A und FR 2 077 313 A1.

In Industrieanlagen für die Behälterherstellung und/oder Produktabfüllung treten vergleichsweise häufig Fehler bei der Zuführung von Vorformlingen und Verschlusskappen auf. Diese führen insbesondere bei einer fest miteinander verblockten Bauweise einzelner Maschinen zu Positionslücken im Produktstrom, wodurch die effektive Maschinenleistung sinkt und in Behandlungsmaschinen stromabwärts Folgefehler, beispielsweise bei der Etikettierung, auftreten können. Diese Problematik wird noch dadurch verstärkt, dass Verschlüsse und/oder Vorformlinge aus Kostengründen gegebenenfalls aus Materialien mit schlechten und/oder schwankenden Gleiteigenschaften bestehen, was die Zuverlässigkeit von Führungselementen, wie Gleitschienen oder dergleichen, einschränkt.

Zusätzliche Probleme entstehen, wenn vergleichsweise leichte Behälterkomponenten, wie beispielsweise Verschlusskappen und Vorformlinge, über geneigte Rampen mittels Schwerkraft zugeführt werden sollen. Bisher ließ sich dies nur durch entsprechend steile Gefällestrecken und entsprechend große Höhenunterschiede beheben, beispielsweise bezüglich eines Einlaufbereichs an einem Ofen für Vorformlinge. Daraus resultiert eine unerwünscht raumgreifende Bauweise.

Ein ähnliches Problemfeld gibt es bei der Zuführung von Behältern unter Staudruck an Einlaufstrecken oder dergleichen, insbesondere falls die Behälter aus einem vergleichsweise schlecht gleitenden Material bestehen und/oder nach der Herstellung noch warm und daher nur eingeschränkt gleitfähig sind. Auch dies kann zu einem Verklemmen der Behälter und zu Positionslücken stromabwärts führen.

Für einen schonenden Transport von Folienbahnen sind aus der Extrusionstechnik und aus der Verpackungstechnik Fügungselemente mit mikroporösen Schichten bekannt, durch die ein Gasstrom geleitet und ein Luftkissen zwischen den Führungselementen und den Folienbahnen erzeugt werden kann, siehe die DE 10 2010 043 791 A1 und die DE 10 2009 026 059 A1. Aus der DE 20 2012 003 268 U1 ist ferner ein Vakuumtransferzylinder für Etiketten bekannt, an dessen Mantelfläche mikroporöse Strukturen ausgebildet sind, durch die sich die Etiketten an dem Vakuumtransferzylinder ansaugen lassen.

Angesichts der oben genannten Probleme bei der Handhabung von Behältern und Behälterkomponenten besteht der Bedarf für Verfahren und Führungssysteme, mit denen sich Transportstaus und dadurch verursachte Positionslücken im Produktstrom verhindern oder zumindest in ihrer Häufigkeit reduzieren lassen.

Die gestellt Aufgabe wird mit einem Verfahren nach Anspruch 1 gelöst. Demnach dient dieses zum Transport von Behältern oder Behälterkomponenten, die insbesondere Vorformlinge und/oder Verschlusskappen sind. Ferner werden die Behälter / Behälterkomponenten in Industrieanlagen für die Behälterherstellung und/oder Produktabfüllung entlang wenigstens eines Führungselements transportiert. Ferner wird ein Luftkissen zwischen dem Führungselement und den Behältern / Behälterkomponenten mittels Durchströmen einer an dem Führungselement ausgebildeten mikroporösen Schicht erzeugt.

Die Behälter sind beispielsweise Getränkeflaschen oder dergleichen. Die Behälter bestehen insbesondere aus Kunststoff, insbesondere PET. Die mikroporöse Schicht bildet im Wesentlichen eine den Behältern / Behälterkomponenten zugewandte Führungsfläche aus. Die beschriebenen Luftkissen werden vorzugsweise mit Druckluft erzeugt. Sinngemäß sind damit jedoch beliebige Gaskissen gemeint, beispielsweise verursacht von einem strömenden Inertgas oder Spülgas.

Somit lässt sich die Gleitreibung der Behälter oder Behälterkomponenten beim Transport entlang des Führungselements reduzieren. Die Gefahr eines Verklemmens der Behälter / Behälterkomponenten sinkt dadurch und in der Folge die Häufigkeit von Positionslücken im nachfolgenden Produktstrom.

Das Führungselement ist vorzugsweise derart ausgebildet, dass die Behälter / Behälterkomponenten an der mikroporösen Schicht entlang gleiten, im Gegensatz zu einer mit Produkten mitlaufenden Rolle, wie beispielsweise einer Transportrolle für eine Folienbahn, oder einem in/ entgegen der Transportrichtung umlaufenden Band. Das Führungselement ist ferner im Wesentlichen stationär bezüglich des Produktstroms. Darunter sind auch in einem bezüglich des Produktstroms stationären Bereich oszillierende oder vibrierende Führungselemente zu verstehen, ebenso quer zum Produktstrom rotierende Walzen oder dergleichen.

Vorzugsweise wird das Luftkissen beim Transport der Behälter / Behälterkomponenten entlang einer Transportbahn mit einer Krümmung erzeugt. Derartige Krümmungen sind beispielsweise an Einlaufkurven für Vorformlinge, Verschlusskappen oder Behältern ausgebildet. Dort treten vergleichsweise hohe Gleitreibungswiderstände auf. Ein Luftkissen ist daher an derartigen Krümmungen besonders hilfreich.

Vorzugsweise wird das Luftkissen beim gleitenden Transport der Behälterkomponenten entlang einer Transportbahn mit einem Gefälle erzeugt. Derartige Transportbahnen finden insbesondere bei Vorformlingen und Verschlusskappen Verwendung. Obwohl diese Behälterkomponenten vergleichsweise leicht sind, können sie mit Hilfe des Luftkissens auf Schienen oder in Rillen gleitend zuverlässig der Weiterverarbeitung zugeführt werden, insbesondere auch bei vergleichsweise flachem Gefälle. Außerdem können materialbedingt und/oder auf Grund ihrer Form schlecht gleitende Behälterkomponenten zuverlässiger zugeführt werden. Auch Schwankungen in der Material- und/oder Oberflächenqualität der Behälterkomponenten sind dann weniger kritisch.

Vorzugsweise wird das Luftkissen beim einbahnigen Transport der Behälterkomponenten erzeugt. In diesem Fall sind die Behälterkomponenten in der Regel auf beiden Seiten der Transportbahn geführt. Daher ist das Luftkissen beim einbahnigen Transport zur Reduzierung von Gleitreibungswiderständen besonders hilfreich. Beispielsweise gleiten dann an den Vorformlingen ausgebildete Tragringe beidseitig über je ein Führungselement mit mikroporöser Schicht, beispielsweise eine Führungsschiene. Es werden dann Luftkissen zwischen den mikroporösen Schichten und dem Tragring zu beiden Seiten des Vorformlings erzeugt. Verschlusskappen gleiten dann beispielsweise in einer Führungsrille mit mikroporöser Schicht / Führungsfläche.

Erfindungsgemäß wird das Luftkissen auf wenigstens einer Sortierwalze zum Sortieren und/oder Ausrichten der Behälterkomponenten erzeugt, insbesondere auf einem Paar nebeneinander ausgebildeter Sortierwalzen. Die Drehachsen derartiger Sortierwalzen verlaufen im Wesentlichen parallel zur Transportbahn der Behälterkomponenten. Es lässt sich dann beispielsweise ein einlaufseitiger Bereich der Sortierwalze mit einem vergleichsweise hohen Reibungskoeffizienten ausbilden, um unterschiedlich ausgerichtete Behälterkomponenten quer zur Transportbahn zu beschleunigen und auf deren Rückweg zur Transportbahn eine gleichmäßige Ausrichtung der Behälterkomponenten zu erzwingen, beispielsweise durch ein Zurückrollen / - rutschen von Vorformlingen von einer schrägen Rampe in die Transportbahn mittels Schwerkraft.

Ein anschließender und/oder auslaufseitiger Bereich der Sortierwalze lässt sich dann mit einer mikroporösen Schicht ausstatten, um den Weitertransport der sortierten und/oder ausgerichteten Behälterkomponenten mittels Luftkissen zu erleichtern. Auch in diesem Fall lässt sich das Spektrum verwendbarer Behälterkomponenten erweitern.

Vorzugsweise wird das Luftkissen beim Einleiten der Behälter unter Staudruck in eine Behandlungsmaschine erzeugt, insbesondere angrenzend an eine Einteilschnecke. Beispielsweise ist dann wenigstens ein seitliches Führungselement mit einer mikroporösen Schicht / Führungsfläche vorhanden, um die Behälter mit verminderter Gleitreibung unter Staudruck zur Einteilschnecke oder dergleichen zu leiten. Dass Verklemmen von Behältern, beispielsweise von Flaschen mit vergleichsweise schlecht gleitender Oberfläche, lässt sich dadurch vermeiden.

Die gestellte Aufgabe wird ebenso mit einem Führungssystem nach Anspruch 7 gelöst. Demnach eignet sich dies für den Transport von Behältern oder Behälterkomponenten, die insbesondere Vorformlinge und/oder Verschlusskappen sind, in Industrieanlagen für die Behälterherstellung und/oder Produktabfüllung. Das Führungssystem umfasst eine Transportbahn für die Behälter / Behälterkomponenten und wenigstens ein entlang der Transportbahn insbesondere stationär ausgebildetes Führungselement. Erfindungsgemäß umfasst das Führungselement wenigstens einen Einströmkanal und eine daran angeschlossene und der Transportbahn zugewandte mikroporöse Schicht.

Durch den Einströmkanal und die mikroporöse Schicht kann ein Gasstrom geleitet werden, insbesondere Druckluft, um ein Luftkissen zwischen der mikroporösen Schicht und den Behältern oder Behälterkomponenten zu erzeugen. Die mikroporöse Schicht kann dann als Führungsfläche mit Luftkissen verstanden werden.

Unter einem stationären Führungselement ist zu verstehen, dass dessen Führungsfläche im Gegensatz zu einer Transportrolle oder dergleichen nicht mit den Behältern oder Behälterkomponenten mitläuft. Das Führungselement könnte jedoch beispielsweise oszillieren, vibrieren, quer zur Transportrichtung rotieren oder dergleichen.

Vorzugsweise ist die Transportbahn gekrümmt und/oder sich verjüngend ausgebildet und/oder weist ein Gefälle auf. Zwischen derartigen Transportbahnen und daran entlang gleitenden Behältern / Behälterkomponenten treten besonders häufig Transportstaus und/oder Positionslücken im Produktstrom auf. Mikroporöse Schichten und Luftkissen wirken sich dort besonders günstig aus.

Erfindungsgemäß ist das Führungselement eine Sortierwalze, wobei die Transportbahn in Längsrichtung der Sortierwalze verläuft. Insbesondere umfasst die Sortierwalze dann wenigstens zwei Abschnitte in Längsrichtung mit unterschiedlichen Gleiteigenschaften. Beispielsweise ist dann lediglich in einem auslaufseitigen Abschnitt der Sortierwalze eine mikroporöse Schicht vorhanden, um den Weitertransport zuvor sortierter und/oder ausgerichteter Behälterkomponenten entlang der Sortierwalze zu verbessern. Damit lassen sich Behälterkomponenten mit unterschiedlichen Gleiteigenschaften und/oder unterschiedlichem Gewicht sowohl zuverlässig sortieren und/oder ausrichten als auch zuverlässig weitertransportieren.

Vorzugsweise ist das Führungselement eine seitliche Einleitschiene im Einlaufbereich einer Einteilschnecke, beispielsweise in Form eines Führungsgeländers. Dies erlaubt eine zuverlässige Führung der Behälter unter Staudruck entlang der Einleitschiene, also ohne Verklemmen bis zur Einteilschnecke hin. Es entstehen somit an dieser Stelle keine Positionslücken, im Sinne von fehlenden Behältern, im Produktstrom.

Vorzugsweise ist die mikroporöse Schicht 10 bis 200 µm dick. Damit lässt sich ein ausreichend gleichmäßiges Luftkissen entlang der Oberfläche des Führungselements erzeugen.

Vorzugsweise sind in der mikroporösen Schicht Poren mit einer Weite von 10 bis 100 nm ausgebildet. Diese Porengröße eignet sich besonders für das Durchleiten von Luftströmen oder anderen Gasströmen. Anders gesagt lässt sich ein örtlich gleichmäßig verteiltes Luftkissen bei geringem Druckverlust in der mikroporösen Schicht erzeugen.

Vorzugsweise umfasst das Führungselement einen Grundkörper aus Metall, insbesondere Edelstahl, und die mikroporöse Schicht besteht aus einem darauf galvanisierten oder gesinterten Werkstoff. Dies ermöglicht eine kostengünstige industrielle Fertigung stabiler und maßhaltiger Führungselemente. Alternativ wäre es auch denkbar, die mikroporöse Schicht durch Flammspritzen auf dem Grundkörper anzubringen.

Vorzugsweise weist die mikroporöse Schicht einen Härtegrad von 30 bis 70 HRC auf. Dies ermöglicht gleichermaßen eine schonende Führung der Behälter / Behälterkomponenten und gewährleistet eine ausreichende mechanische Stabilität und Standzeit der mikroporösen Schicht.

Vorzugsweise umfasst das Führungssystem ferner eine an den Einströmkanal angeschlossene Druckluftversorgung. Druckluft ist als Medium in Industrieanlagen für die Behälterherstellung und/oder Produktabfüllung standardmäßig verfügbar. Somit ist der zusätzliche apparative Aufwand für die Erzeugung der Luftkissen gering.

Die mikroporösen Schichten werden vorzugsweise selektiv in Bereichen der Führungselemente ausgebildet, die für das gleitende Führen von Behälterkomponenten oder Behältern ausgelegt sind, die somit beim ordnungsgemäßen Transport mit den Behälterkomponenten oder Behältern in Berührung kommen können. Ebenso werden die mikroporösen Schichten vorzugsweise selektiv in Bereichen der Führungselemente ausgebildet, in denen ein erhöhtes Risiko für ein Hängenbleiben und/oder Verklemmen der Behälterkomponenten oder Behälter besteht. Es sind dann beispielsweise nur hinsichtlich eines ordnungsgemäßen Transports kritische Abschnitte der Führungselemente mikroporös beschichtet, beispielsweise Kurven der Transportbahn oder Übergänge zwischen horizontalen Abschnitten der Transportbahn und Gefällestrecken. Dadurch lässt sich die Luftkissen erzeugende Oberfläche insgesamt minimieren und Druckluft einsparen.

Bevorzugte Ausführungsformen der Erfindung sind in den Zeichnungen dargestellt. Es zeigen:
- Fig. 1: einen Querschnitt durch Führungselemente mit mikroporöser Schicht;
- Fig. 2: eine Schrägansicht und Seitenansicht einer Einlaufschiene für Vorformlinge;
- Fig. 3: eine schematische seitliche Ansicht einer Zuführung für Verschlusskappen;
- Fig. 4: einen Querschnitt durch Sortierwalzen mit mikroporöser Schicht;
- Fig. 5: eine Schrägansicht der Sortierwalzen; und
- Fig. 6: eine schematische Draufsicht auf eine Behälterzuführung zu einer Einlaufschnecke.

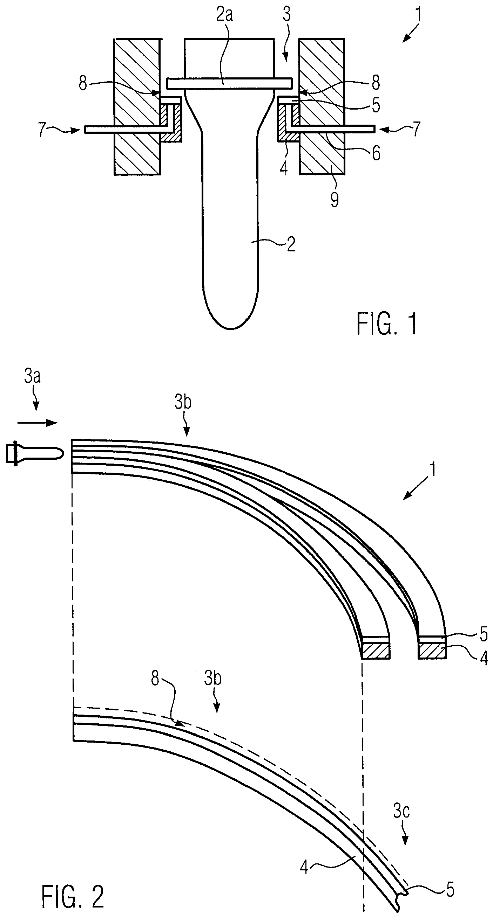

Wie die Fig. 1 erkennen lässt, umfasst das Führungssystem 1 für den Transport von Behälterkomponenten, insbesondere von Vorformlingen 2, gemäß einer ersten bevorzugten Ausführungsform beidseitig entlang einer (beispielhaft aus der Zeichenebene heraus weisenden) Führungsbahn 3 verlaufende Führungselemente 4 mit mikroporösen Schichten 5. In den Führungselementen 4 sind Einströmkanäle 6 ausgebildet, durch die ein strömendes Gas 7, beispielsweise in Form von Druckluft, durch die mikroporöse Schicht 5 zur Führungsbahn 3 geleitet wird, um ein Luftkissen 8 über der mikroporösen Schicht 5 und unter an den Vorformlingen ausgebildeten Tragringen 2a zu erzeugen.

Die Führungselemente 4 sind bezüglich des Produktstroms der Vorformlinge 2 entlang der Transportbahn 3 stationär ausgebildet. Die Führungselemente 4 sind beispielsweise an einem Rahmen 9 befestigt, der auch selbst eine Führungsfunktion haben könnte und der Einfachheit halber in der Fig. 2 weggelassen ist. Die Führungselemente 4 sind für den einbahnigen Transport der Vorformlinge 2 ausgebildet. Jeder Vorformling 2 ist also für sich genommen geführt, beispielsweise beidseitig auf und/ oder zwischen zwei Führungselementen 4.

Die Fig. 2 verdeutlicht in einer oberen Schrägansicht und in einer unteren seitlichen Ansicht als Einlaufschiene für Vorformlinge 2 ausgebildete Führungselemente 4 mit mikroporösen Schichten 5. Diese verlaufen im Anschluss an einen waagrechten und/oder geradlinigen Abschnitt 3a der Transportbahn 3 beispielsweise zuerst entlang eines seitlich und nach unten gekrümmten Abschnitts 3b der Transportbahn 3 und anschließend entlang eines mit einem Gefälle ausgebildeten Abschnitts 3c. Die Vorformlinge 2 werden beispielsweise am Ende des horizontalen Abschnitts 3a von einem Transporteur oder dergleichen aktiv ausgestoßen und gleiten demzufolge bis zum Abschnitt 3c, in dem sie mittels Schwerkraft gleitend weiter transportiert werden.

Mit Hilfe der Luftkissen 8 über den mikroporösen Schichten 5 lässt sich der Gleitreibungswiderstand an den Führungselementen 4 soweit reduzieren, dass auch die vergleichsweise leichten Vorformlinge 2 entlang der Abschnitte 3b und 3c zuverlässig entlang gleiten.

Im Umkehrschluss lässt sich mit Hilfe von Luftkissen 8 das für einen zuverlässigen Transport der Vorformlinge 2 benötigte Gefälle vor allem im Bereich des Abschnitts 3c der Transportbahn 3 reduzieren. Dadurch ist eine kompaktere Bauweise möglich.

Die mikroporöse Schicht 5 ist vorzugsweise 10 bis 200 µm dick. Es wäre jedoch auch denkbar, die Führungselemente 4 mit dickeren mikroporösen Schichten auszubilden oder Führungselemente 4 anteilig oder vollständig aus einem mikroporösen Material herzustellen. Sämtliche mikroporösen Schichten und Führungselemente sind zum besseren Verständnis in den Figuren nicht maßstäblich dargestellt.

Führungselemente 4 mit mikroporösen Schichten 5 werden vorzugsweise selektiv entlang von Bahnkrümmungen und/oder Gefällestrecken ausgebildet, also in Bereichen der Transportbahn 3, in denen ansonsten eine besonders hohe Gleitreibung zwischen den Führungselementen 4 und den Behälterkomponenten zu erwarten wäre, und/oder in denen der gleitende Weitertransport ausschließlich mittels Schwerkraft erfolgt. Es ist jedoch prinzipiell denkbar, auch andere Abschnitte der Transportbahn 3 mit Führungselementen 4 und mikroporösen Schichten 5 auszubilden, um dort Luftkissen 8 für den gleitenden Transport der Vorformlinge 2 auszubilden.

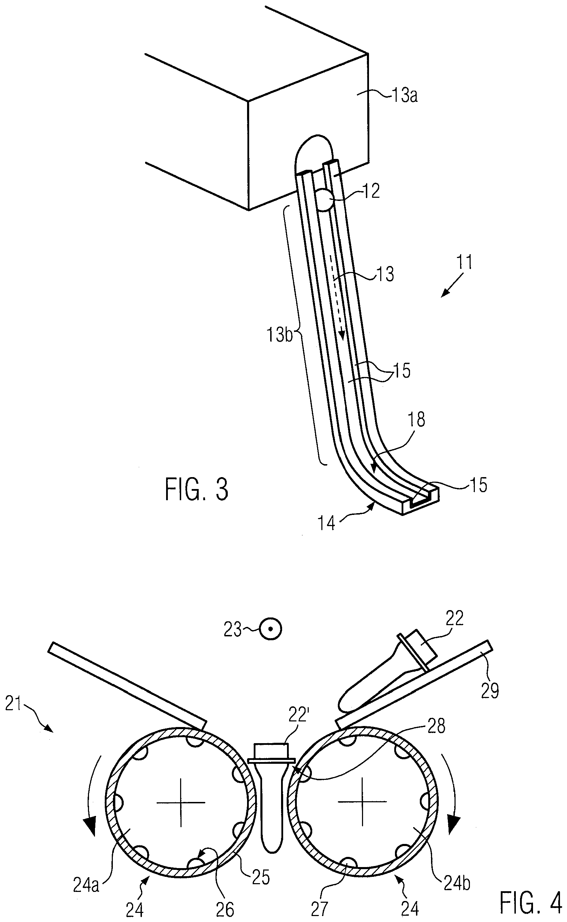

Die Fig. 3 zeigt das Führungssystem 11 gemäß einer zweiten bevorzugten Ausführungsform für das Zuführen von Verschlusskappen 12 zu einer (nicht dargestellten) Verschließmaschine. In diesem Fall ist das Führungselement 14 entlang einer Transportbahn 13 als Führungsrinne mit einer oberen mikroporösen Schicht 15 ausgebildet. Somit wird auf der Oberseite der mikroporösen Schicht 15 mit Druckluft oder dergleichen ein Luftkissen 18 hergestellt, auf dem die Verschlusskappen 12 über einen als Gefällestrecke ausgebildeten Abschnitt 13b der Transportbahn 13 mittels Schwerkraft nach unten gleiten. Oberhalb der Gefällestrecke 13b ist ein Zuführtrichter 13a schematisch angedeutet.

Die mikroporöse Schicht 15 ist vorzugsweise ferner selektiv an den inneren Seitenwänden der Führungsrinne ausgebildet. Die mikroporöse Schicht 15 hat dann näherungsweise einen U-förmigen Querschnitt, siehe deren schematische Darstellung in der Fig. 3. Die mikroporöse Schicht 15 ist vorzugsweise selektiv in Bereichen des Führungselements 14 ausgebildet, die für das gleitende Führen der Verschlusskappen 12 ausgelegt sind, die somit beim ordnungsgemäßen Transport mit den Verschlusskappen 12 in Berührung kommen können.

Die Fig. 4 verdeutlicht schematisch ein Führungssystem 21 gemäß einer dritten bevorzugten Ausführungsform für die Sortierung und/oder Ausrichtung von Behälterkomponenten 22 und den gleitenden Weitertransport der sortierten / ausgerichteten Behälterkomponenten 22'. Beispielhaft sind zwei Vorformlinge dargestellt. Demnach sind entlang einer vorzugsweise geneigten (und beispielhaft aus der Zeichenebene heraus weisenden) Transportbahn 23 Führungselemente 24 in Form von Sortierwalzen mit einer äußeren mikroporösen Schicht 25 ausgebildet.

Die mikroporöse Schicht 25 wird über schematisch angedeutete Einströmkanäle 26 mit Druckluft 27 versorgt, um im Bereich oberhalb der beiden Sortierwalzen ein Luftkissen 28 zu den Behälterkomponenten 22, 22' hin auszubilden. Die Führungskanäle 26 sind in einem beispielsweise aus Edelstahl gefertigten und im Wesentlichen zylindrischen Grundkörper 24a der Sortierwalzen in deren Längsrichtung ausgebildet, die mikroporöse Schicht 25 im Wesentlichen auf der Mantelfläche des Grundkörpers 24a und die Einströmkanäle 26 umschließend.

Zur Sortierung / Ausrichtung der Behälterkomponenten 22 werden diese zuerst von den Sortierwalzen quer zur Transportbahn 23 beschleunigt und beispielsweise auf schräg angestellte und entlang der Transportbahn 23 verlaufende Rampen 29 geschubst. Von dort können die Behälterkomponenten 22 dann nach unten rollen und/oder gleiten und nehmen dabei eine einheitliche Ausrichtung bezüglich der Transportbahn 23 ein, beispielsweise orthogonal dazu.

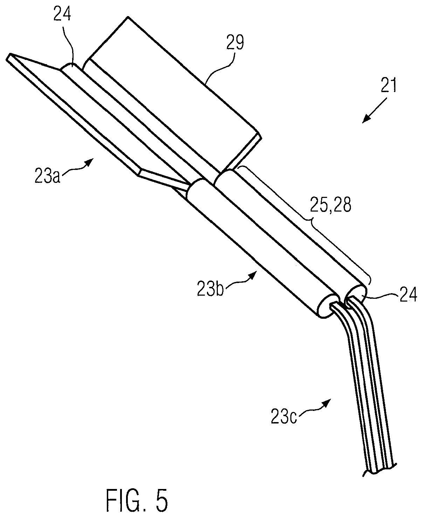

Wie die Fig. 5 schematisch verdeutlicht, wird dies vorzugsweise dadurch begünstigt, dass die Transportbahn 23 in einen eingangsseitigen Sortierabschnitt 23a und einen ausgangsseitigen Gleitabschnitt 23b unterteilt ist, an den sich dann beispielsweise ein Abschnitt 23c mit einem steileren Gefälle für den gleitenden Weitertransport der sortierten Behälterkomponenten 22' anschließt.

Es ist dann beispielsweise nur im Gleitabschnitt 23b eine mikroporöse Schicht 25 an den Führungselementen 24, also den Sortierwalzen, ausgebildet. Demgegenüber weisen die Mantelflächen der Sortierwalzen im Sortierabschnitt 23a einen höheren Reibungskoeffizienten auf, der ein Beschleunigen der zu sortierenden Behälterkomponenten 22 quer zur Transportbahn 23 auf die Rampen 29 begünstigt. Im anschließenden Gleitabschnitt 23b ermöglicht das Luftkissen 28 einen zuverlässigen Weitertransport der sortierten / ausgerichteten Behälterkomponenten 22', beispielsweise zur anschließenden Gefällestrecke im Abschnitt 23c.

Die mikroporöse Schicht 25 könnte auch nur auf Teilbereichen einzelner Sortierwalzen ausgebildet sein, beispielsweise nur auf axialen Teilbereichen der Sortierwalzen innerhalb des Gleitabschnitts 23b und/oder auf umfänglichen Teilbereichen innerhalb des Gleitabschnitts 23b, um die Luftkissen 28 erzeugende Oberfläche und damit den Druckluftverbrauch zu reduzieren.

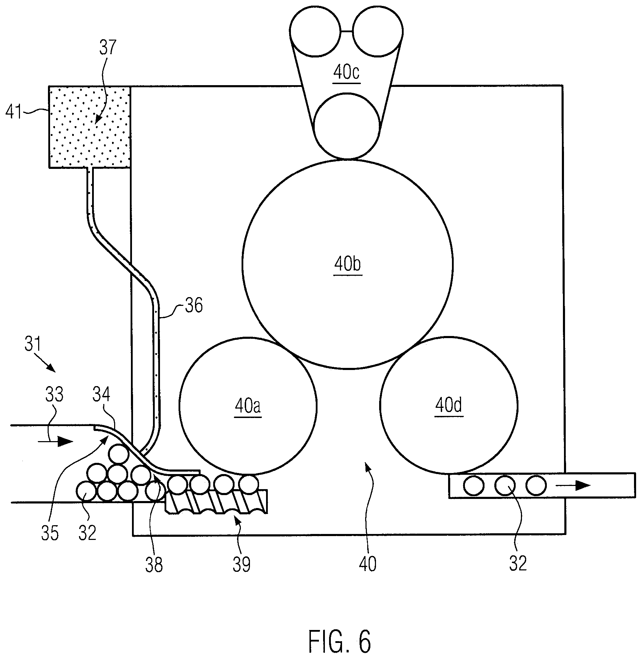

Die Fig. 6 zeigt schematisch ein Führungssystem 31 gemäß einer vierten bevorzugten Ausführungsform, bei der Behälter 32, insbesondere solche aus Kunststoff, unter Staudruck entlang einer Transportbahn 33 geführt und dabei von einem die Transportbahn 33 verjüngenden Führungselement 34 mit einer mikroporösen Schicht 35 seitlich umgelenkt werden. Das Führungselement 34 ist beispielsweise ein Geländer mit einem schrägen und/oder gekrümmten Verlauf. Die mikroporöse Schicht 35 wird über wenigstens einen Einströmkanal 36 mit Druckluft 37 oder dergleichen versorgt. Dadurch wird in Richtung zur Transportbahn 33 ein Luftkissen 38 zum reibungsarmen Zuführen der Behälter 32 zu einer Einteilschnecke 39 oder dergleichen erzeugt.

Mit Hilfe des Luftkissens 38 lässt sich ein Verklemmen der Behälter 32 im Einlaufbereich unmittelbar vor der Einlaufschnecke 39 vermeiden, auch falls die Behälter 32 Oberflächen mit vergleichsweise schlechten Gleiteigenschaften aufweisen, wie beispielsweise auf Grund von unmittelbar nach dem Streckblasen vorhandener Restwärme. Die vergleichsweise leichten Behälter 32 aus Kunststoff gleiten dann trotz des Staudrucks ohne Verklemmen entlang der mikroporösen Schicht 35 auf dem Luftkissen 38 zur Einteilschnecke 39. Insbesondere laufen die Behälter 32 dann ohne dazwischen liegende Positionslücken, also Transportpositionen, an denen Behälter fehlen, in die Einteilschnecke 39 und werden von dieser als lückenloser Behälterstrom an die nachfolgende Behandlungseinheit übergeben.

Die Einteilschnecke 39 ist beispielsweise Bestandteil einer Etikettiermaschine 40, an der schematisch ein Einlaufstern 40a, ein Etikettierkarussell 40b, ein Etikettieraggregat 40c und ein Auslaufstern 40d angedeutet sind.

Der Einströmkanal 36 ist beispielsweise an eine schematisch angedeutete Druckluftversorgung 41 angeschlossen.

Die mikroporösen Schichten 5, 15, 25, 35 sind vorzugsweise mit einer Porenweite von 10 bis 100 nm ausgebildet, um eine gleichmäßige Verteilung des Luftkissens 8, 18, 28, 38 bei möglichst geringem Druckverlust in der mikroporösen Schicht zu ermöglichen.

Die mikroporösen Schichten 5, 15, 25, 35 haben vorzugsweise einen Härtegrad von 30 bis 70 HRC, um einen schonenden Transport von Behälterkomponenten 22 im Allgemeinen, von Vorformlingen 2 und Verschlusskappen 12 im Speziellen, und/oder von Behältern 32, insbesondere solchen aus Kunststoff, zu ermöglichen.

Die Gleiteigenschaften der Führungselemente 4, 14, 24, 34 lassen sich durch Einstellen des an den mikroporösen Schichten 5, 15, 25, 35 jeweils anliegenden Überdrucks und damit der Stärke der Luftkissen 8, 18, 28, 38 beeinflussen. Beispielsweise können damit Gleiteigenschaften und/oder Sortiereigenschaften an Vorformlinge 2, Verschlusskappen 12, zu sortierende Behälterkomponenten 22, sortierte Behälterkomponenten 22' und/oder Behälter 32 angepasst werden.

Mit Hilfe der Luftkissen 8, 18, 28, 38 können Vorformlinge 2, Verschlusskappen 12, zu sortierende Behälterkomponenten 22, sortierte Behälterkomponenten 22' und/oder Behälter 32 je nach individuellem Gewicht und/oder Gleiteigenschaften zuverlässig entlang von Transportbahnen 3, 13, 23, 33 gleitend transportiert werden. Zudem ist ein besonders materialschonender Transport der Behälterkomponenten / Behälter möglich.

Die beschriebenen Ausführungsformen 1, 11, 21, 31 lassen sich besonders vorteilhaft in Industrieanlagen für die Behälterherstellung und/oder Produktabfüllung verwenden, insbesondere falls einzelne Behandlungsmaschinen, wie beispielsweise Blasmaschinen, Etikettiermaschinen, Füllmaschinen oder dergleichen, als Maschinenblock miteinander verbunden sind.

Durch Fehlervermeidung bei der Zuführung von Behälterkomponenten / Behältern lässt sich die resultierende Leistung derartiger Maschinenblöcke in besonderer Weise steigern.

## Patentansprüche

1. Verfahren zum Transport von Behältern (32) oder Behälterkomponenten (22) in Industrieanlagen für die Behälterherstellung und/oder Produktabfüllung, wobei die Behälter / Behälterkomponenten entlang wenigstens eines Führungselements (4, 14, 24, 34) transportiert werden, wobei ein Luftkissen (8, 18, 28, 38) zwischen dem Führungselement und den Behältern / Behälterkomponenten mittels Durchströmen einer an dem Führungselement ausgebildeten mikroporösen Schicht (5, 15, 25, 35) erzeugt wird, **dadurch gekennzeichnet, dass** das Führungselement (24) eine Sortierwalze zum Sortieren der Behälterkomponenten (22) ist und das Luftkissen (28) auf der wenigstens einen Sortierwalze erzeugt wird.

2. Verfahren nach Anspruch 1, wobei das Luftkissen (8, 18, 28, 38) für einen Transport der Behälter (32) / Behälterkomponenten (22) entlang einer Transportbahn (3, 13, 33) mit einer Krümmung erzeugt wird.

3. Verfahren nach Anspruch 1 oder 2, wobei das Luftkissen (8, 18, 28, 38) für einen gleitenden Transport der Behälterkomponenten entlang einer Transportbahn (3, 13) mit einem Gefälle erzeugt wird.

4. Verfahren nach einem der vorigen Ansprüche, wobei das Luftkissen (8, 18, 28, 38) für einen einbahnigen Transport der Behälterkomponenten (22) erzeugt wird.

5. Verfahren nach einem der vorigen Ansprüche, das zum Transport von Vorformlingen (2) und/oder Verschlusskappen (12) ausgebildet ist.

6. Verfahren nach Anspruch 1 oder 2, wobei das Luftkissen (38) beim Einleiten der Behälter (32) unter Staudruck in eine Behandlungsmaschine erzeugt wird, insbesondere angrenzend an eine Einteilschnecke (39).

7. Führungssystem für den Transport von Behältern (32) oder Behälterkomponenten (22), insbesondere von Vorformlingen (2) und/oder Verschlusskappen (12), in Industrieanlagen für die Behälterherstellung und/oder Produktabfüllung, umfassend eine Transportbahn (3, 13, 23, 33) und wenigstens ein entlang der Transportbahn insbesondere stationär ausgebildetes Führungselement (4, 14, 24, 34), wobei das Führungselement wenigstens einen Einströmkanal (6, 16, 26, 36) und eine daran angeschlossene und der Transportbahn zugewandte mikroporöse Schicht (5, 15, 25, 35) umfasst, **dadurch gekennzeichnet, dass** das Führungselement (24) eine Sortierwalze ist und die Transportbahn (23) in Längsrichtung der Sortierwalze verläuft.

8. Führungssystem nach Anspruch 7, wobei die Transportbahn (23) ein Gefälle aufweist.

9. Führungssystem nach wenigstens einem der Ansprüche 7 bis 8, wobei die mikroporöse Schicht (5, 15, 25, 35) 10 bis 200 µm dick ist.

10. Führungssystem nach wenigstens einem der Ansprüche 7 bis 9, wobei in der mikroporösen Schicht (5, 15, 25, 35) Poren mit einer Weite von 10 bis 100 nm ausgebildet sind.

11. Führungssystem nach wenigstens einem der Ansprüche 7 bis 10, wobei das Führungselement (24) einen Grundkörper (24a) aus Metall, insbesondere Edelstahl, umfasst und die mikroporöse Schicht (25) aus einem darauf galvanisierten oder gesinterten Werkstoff besteht.

12. Führungssystem nach wenigstens einem der Ansprüche 7 bis 11, wobei die mikroporöse Schicht (5, 15, 25, 35) einen Härtegrad von 30 bis 70 HRC aufweist.

13. Führungssystem nach wenigstens einem der Ansprüche 7 bis 12, ferner mit einer an den Einströmkanal (36) angeschlossenen Druckluftversorgung (41).

14. Führungssystem nach wenigstens einem der Ansprüche 7 bis 13, wobei die mikroporöse Schicht (5, 15, 25, 35) selektiv an wenigstens einem Abschnitt des Führungselements (4, 14, 24, 34) ausgebildet ist, der für das gleitende Führen von Behälterkomponenten (22) oder Behältern (2) ausgelegt ist.

## Claims

1. Method for transporting containers (32) or container components (22) in industrial plants for producing containers and/or filling products, where said containers / container components are transported along at least one guide element (4, 14, 24, 34), where an air cushion (8, 18, 28, 38) is created between said guide element and said containers / container components by a stream passed through a microporous layer (5, 15, 25, 35) formed on said guide element, **characterized in that** said guide element (24) is a sorting roller for sorting the container components (22) and the air cushion (28) is created on the at least one sorting roller.

2. Method according to claim 1, where said air cushion (8, 18, 28, 38) for transporting said containers (32) / container components (22) is created along a transport lane (3, 13, 33) having a bend.

3. Method according to claim 1 or 2, where said air cushion (8, 18, 28, 38) is, for the sliding transportation of said container components, created along a transport lane (3, 13) having an inclination.

4. Method according to one of the preceding claims, where said air cushion (8, 18, 28, 38) is created for single-lane transportation of said container components (22).

5. Method according to one of the preceding claims, which is configured for transporting preforms (2) and/or closure caps (12).

6. Method according to claim 1 or 2, where said air cushion (38) is created when feeding said containers (32) under back pressure into a treatment machine, in particular adjoining an infeed worm (39).

7. Guide system for transporting containers (32) or container components (22), in particular preforms (2) and/or closure caps (12), in industrial plants for producing containers and/or filling products, comprising a transport lane (3, 13, 23, 33) and at least one guide element (4, 14, 24, 34) which is formed in particular in a stationary manner along said transport lane, where said guide element comprises at least one inflow duct (6, 16, 26, 36) and a microporous layer (5, 15, 25, 35) connected thereto and facing said transport lane, **characterized in that** said guide element (24) is a sorting roller and said transport lane (23) runs in the longitudinal direction of said sorting roller.

8. Guide system according to claim 7, where said transport lane (23) has an inclination.

9. Guide system according to at least one of the claims 7 to 8, where said microporous layer (5, 15, 25, 35) has a thickness of 10 to 200 µm.

10. Guide system according to at least one of the claims 7 to 9, where pores preferably having a width of 10 to 100 nm are formed in said microporous layer (5, 15, 25, 35).

11. Guide system according to at least one of the claims 7 to 10, where said guide element (24) comprises a base body (24a) made of metal, in particular stainless steel, and said microporous layer (25) is made of material galvanized or sintered thereon.

12. Guide system according at least one of the claims 7 to 11, where said microporous layer (5, 15, 25, 35) has a degree of hardness of 30 to 70 HRC.

13. Guide system according to at least one of claims 7 to 12, further comprising a compressed air supply (41) connected to said inflow duct (36).

14. Guide system according to at least one of the claims 7 to 13, where said microporous layer (5, 15, 25, 35) is formed selectively at at least one section of said guide element (4, 14, 24, 34) which is designed for slidably guiding container components (22) or containers (2).

## Revendications

1. Procédé de transport de récipients (32) ou de composants de récipient (22) au sein d'installations industrielles destinées à la fabrication de récipients et/ou au remplissage de produits, dans lequel les récipients/composants de récipient sont transportés le long d'au moins un élément de guidage (4, 14, 24, 34), dans lequel un coussin d'air (8, 18, 28, 38) entre l'élément de guidage et les récipients/composants de récipient est généré grâce à la traversée d'une couche microporeuse (5, 15, 25, 35) formée au niveau de l'élément de guidage, **caractérisé en ce que** l'élément de guidage (24) est un rouleau de tri permettant de trier les composants de récipient (22) et le coussin d'air (28) est généré sur le au moins un rouleau de tri.

2. Procédé selon la revendication 1, dans lequel le coussin d'air (8, 18, 28, 38) est généré en vue d'un transport des récipients (32)/composants de récipient (22) le long d'une voie de transport (3, 13, 33) présentant une courbure.

3. Procédé selon la revendication 1 ou 2, dans lequel le coussin d'air (8, 18, 28, 38) est généré en vue d'un transport par coulissement des composants de récipient le long d'une voie de transport (3, 13) présentant une pente.

4. Procédé selon l'une quelconque des revendications précédentes, dans lequel le coussin d'air (8, 18, 28, 38) est généré en vue d'un transport des composants de récipient (22) sur une seule voie.

5. Procédé selon l'une quelconque des revendications précédentes, conçu pour le transport de préformes (2) et/ou de capuchons de fermeture (12).

6. Procédé selon la revendication 1 ou 2, dans lequel le coussin d'air (38) est généré lors de l'introduction des récipients (32) sous pression dynamique dans une machine de traitement, en particulier au voisinage d'une vis sans fin (39).

7. Système de guidage pour le transport de récipients (32) ou de composants de récipient (22), en particulier de préformes (2) et/ou de capuchons de fermeture (12), au sein d'installations industrielles destinées à la fabrication de récipients et/ou au remplissage de produits, comprenant une voie de transport (3, 13, 23, 33) et au moins un élément de guidage (4, 14, 24, 34) conçu en particulier de manière stationnaire le long de la voie de transport, dans lequel l'élément de guidage comprend au moins un canal d'entrée (6, 16, 26, 36) et une couche microporeuse (5, 15, 25, 35) raccordée audit canal et tournée vers la voie de transport, **caractérisé en ce que** l'élément de guidage (24) est un rouleau de tri et la voie de transport (23) s'étend dans la direction longitudinale du rouleau de tri.

8. Système de guidage selon la revendication 7, dans lequel la voie de transport (23) présente une pente.

9. Système de guidage selon au moins l'une quelconque des revendications 7 à 8, dans lequel la couche microporeuse (5, 15, 25, 35) a une épaisseur comprise entre 10 et 200 µm.

10. Système de guidage selon au moins l'une quelconque des revendications 7 à 9, dans lequel des pores ayant une largeur comprise entre 10 et 100 nm sont formés dans la couche microporeuse (5, 15, 25, 35).

11. Système de guidage selon au moins l'une quelconque des revendications 7 à 10, dans lequel l'élément de guidage (24) comprend un corps de base (24a) en métal, en particulier en acier inoxydable, et la couche microporeuse (25) est constituée d'un matériau galvanisé ou fritté sur ledit corps de base.

12. Système de guidage selon au moins l'une quelconque des revendications 7 à 11, dans lequel la couche microporeuse (5, 15, 25, 35) présente un degré de dureté compris entre 30 et 70 HRC.

13. Système de guidage selon au moins l'une quelconque des revendications 7 à 12, comprenant en outre une alimentation en air comprimé (41) raccordée au canal d'entrée (36).

14. Système de guidage selon au moins l'une quelconque des revendications 7 à 13, dans lequel la couche microporeuse (5, 15, 25, 35) est formée de manière sélective sur au moins une partie de l'élément de guidage (4, 14, 24, 34) conçu pour le guidage par coulissement de composants de récipient (22) ou de récipients (2).
